(19) Europäisches Patentamt
European Patent Office
Office européen des brevets

(11) **EP 1 981 944 B1**

(12) **EUROPEAN PATENT SPECIFICATION**

(45) Date of publication and mention
of the grant of the patent:
**20.01.2016 Bulletin 2016/03**

(51) Int Cl.:
***C09D 163/00*** *(2006.01)*    ***C08K 3/22*** *(2006.01)*

(21) Application number: **06818438.1**

(22) Date of filing: **09.11.2006**

(86) International application number:
**PCT/EP2006/010748**

(87) International publication number:
**WO 2007/054304 (18.05.2007 Gazette 2007/20)**

(54) **EPOXY BASED COATINGS**

EPOXIDBASISBESCHICHTUNGSSTOFFE

REVETEMENTS A BASE D'EPOXY

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.11.2005 EP 05024529**

(43) Date of publication of application:
**22.10.2008 Bulletin 2008/43**

(73) Proprietor: **PPG B.V.**
**1422 AD Uithoorn (NL)**

(72) Inventors:
• **VAN WESSEL, Rudolf, Wilhelmus, Bernardus**
**NL-2352 KC Leiderdorp (NL)**
• **VAN DER POEL, Henk**
**NL-2215 VL Voorhout (NL)**
• **VISSER, Sijmen, Johan**
**NL-1156 BN Marken (NL)**
• **DE JONG, Jan**
**NL-1503 VC Zaandam (NL)**

(74) Representative: **Appleyard Lees**
**15 Clare Road**
**Halifax HX1 2HY (GB)**

(56) References cited:
**EP-A- 0 366 958      WO-A2-95/00594**
**US-A- 4 351 914      US-B1- 6 632 860**

• **PATENT ABSTRACTS OF JAPAN vol. 2002, no. 02, 2 April 2002 (2002-04-02) & JP 2001 271030 A (MATSUSHITA ELECTRIC WORKS LTD), 2 October 2001 (2001-10-02)**

**Description**

The present invention relates to novel epoxy based coatings such as primers, build-coats and intermediate coatings. The invention also extends to the use of novel epoxy based coatings and methods of coating metal substrates with novel epoxy based coatings.

Epoxy coatings such as those based on aromatic diglycidyl ethers of bisphenol A (DGEBA) reacted with, for instance, polyamides, polyamines or polyamide adducts, the adducts being based on reaction products of DGEBA and polyamines or polyamides, or epoxy coatings based on modified DGEBA (e.g. fatty acid modified DGEBA) are typically used in protective coatings and marine coatings. Such coatings have strong adhesion to metal substrates and have good anti-corrosive properties as well as resistance to certain chemicals.

Unfortunately, DGEBA based epoxies have low resistance to UV radiation causing degradation of the coating following exposure to sunlight. The degradation of the coating by UV light limits the overcoatability potential of such coatings, especially where the coating may be exposed to sunlight for an extended period prior to overcoating. A proposed solution to this problem is the modification of DGEBA by certain fatty acids to extend the UV exposure period after which viable overcoating is still possible.

This technology has been used in protective coating applications including the marine sector. In particular, this technology has found use as coal-tar based epoxy primer top-coats over non fatty acid modified DGEBA primers and intermediate coats. The use of such top-coats found particular use for top-side layers of ships (i.e. the part of the hull above the unloaded water line) as it gave a hydrophobic, water repellent primer top-coat prior to overcoating.

However, although such coal-tar based epoxies were acceptable for short periods of UV exposure they could not maintain overcoatability suitability for very long periods of UV exposure such as those found in block-stage ship building. Unlike traditional ship-building methods where ships were built in one total section, primed and then top-coated, block-stage ship building involves building ships in sections. The sections are primed after production but not top-coated until after subsequent section welding and edge treatment. Therefore, after the block stage, the block stage sections can be exposed to UV radiation in sunlight for considerable periods prior to section welding and top-coat application. After such prolonged UV exposure of the underlying coal-tar primer coat, although the dry adhesion of the applied top-coat can be satisfactory, delamination of the top-coat from the primer coat can occur under wet conditions.

Furthermore, coal-tar based epoxies have unsatisfactory levels of gloss for modern high-gloss applications in marine coatings. This has led to replacement of coal-tar epoxies, with highly durable two component polyurethane coatings utilising aliphatic isocyanates.

The delamination problems associated with UV exposure of epoxy based primer coatings have also led to the requirements of expensive alkali-cleaning and/or mechanical sanding of the epoxy top primer prior to overcoating with the top coat. Alternatively, a UV resistant upper layer may be applied at the block stage. Such a UV resistant layer is typically a polyurethane coating as mentioned above. The application of this UV resistant layer as the upper primer coat at the block stage is aimed at preventing delamination of the eventual top coat from the upper primer coat under wet conditions. However, the UV resistant polyurethane layer has poorer anti-corrosive properties than epoxy based primers so that it is not acceptable to apply a single polyurethane primer layer to the metal substrate prior to the top-coat just as it is not acceptable to apply a single epoxy primer layer in the block-stage followed by a top-coat in the hull stage. An inefficient system of at least 3 layers(epoxy primer, UV resistant polyurethane intermediate coat, and topcoat) is therefore employed.

An object of the present invention is to overcome one or more of the above problems.

According to the present invention there is provided an epoxy based primer composition, a coated metal substrate, the use of zinc oxide and a process of coating a metal substrate as set out in the claims.

For the avoidance of doubt, references to "epoxy based primer compositions" herein are references to the cured coating unless indicated otherwise. In addition, references to primer should be taken to include other pretop-coat coatings including build coat(s) or intermediate coat(s). Advantageously, by the use of the primer of the invention, a metal substrate such as the hull of a ship can be coated with primer and top-coat independent of the interval between the application of the two coatings i.e. the UV exposure, and independent of the exposure of these coatings to water immersion. A particular advantage of the present invention is the application of the epoxy based primer composition in the "block-stage" of a new ship and a polyurethane or epoxy top-coat in the hull stage without expensive surface cleaning and/or mechanical sanding or additional application of UV protective coatings over the corrosion resistant primer prior to topcoat application. Therefore, the invention is particularly useful in preventing inter-coat delamination in or after exposure to water.

Examples of suitable epoxy resins, are resins which can be produced by the attachment of an epoxide group to both ends of a paraffinic hydrocarbon chain (for example, diepoxides derived from butanediol), or of a polyether chain, such as $\alpha$-$\omega$-diepoxy polypropylene glycol. More exotic diepoxy resins include but are not limited to vinyl cyclohexene dioxide, 3, 4-epoxycyclohexylmethyl 3,4-epoxycyclohexanemono carboxylate, 3- (3, 4-epoxycyclohexyl)-8, 9-epoxy-2,4-dioxaspiro-[5. 5] undecane, bis (2,3- epoxycyclopentyl) ether, bis (3, 4-epoxy-6-methylcyclohexyl) adipate and resorcinol diglycidyl ether. Other epoxy resins employed can contain more than two epoxide functional groups per molecule, such as epoxidized soya oils, polyglycidyl ethers of phenolic resins of the novolak type, p-aminophenoltriglycidyl ether or 1,1, 2,2-tetra (p- hydroxyphenyl) ethane tetraglycidyl ether. Another class of epoxy resins comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis (4-hydroxyphenyl)-2, 2-propane, i.e. bisphenol A; bis (4-hydroxyphenyl)-1, 1-isobutane, 4,4-dihydroxybenzophenone ; bis (4-hydroxyphenyl-1, 1-ethane ; bis (2-hydroxynaphenyl)-methane ; and 1,5- hydroxynaphthalene. One very common polyepoxide is a polyglycidyl ether of a polyphenol, such as bisphenol A. Another class of epoxy resin consists of the hydrogenated epoxy resin based on bisphenol A such as Eponex 1510 from Shell.

Other classes of epoxy resins are the polyglycidyl ethers of polyhydric alcohols. These compounds may be derived from such polyhydric alcohols as ethylene glycol, diethylene glycol, triethylene glycol, 1,2- propylene glycol, 1, 4-butylene glycol, 1,5- pentanediol, 1,2,6-hexane- triol, glycerol, trimethylolpropane, and bis (4-hydroxycyclohexyl)-2, . 2- propane. A detailed list of suitable epoxide compounds can be found in the handbooks A. M. Paquin, "Epoxidverbindungen und Harze" (Epoxide Compounds and Resins), Springer Verlag, Berlin 1958, Chapter IV and H. Lee and K.

Neville,"Handbook of Epoxy Resins" MC Graw Hill Book Company, New York 1982 Reissue, as well as C. A. May, "Epoxy Resins-Chemistry and Technology", Marcel Dekker, Inc. New York and Basle, 1988. Typically, the molecular weight (Mw) of the epoxy resin is 300-4000.

Preferably, the invention relates to an epoxy based primer composition, wherein the epoxy resin is bisphenol A diglycidyl ether (DGEBA).

Preferably, said epoxy based primer compositions are based on an aromatic diglycidyl ether of bisphenol A (DGEBA).

Suitable epoxy resin curing agents include polyamines and polyamides. The poly-amine compound may be any amine compound that can be used as the curing agent for an epoxy resin. Suitable amines include aliphatic amines, cycloaliphatic amines, aromatic amines, araliphatic amines, imidazoline group-containing polyaminoamides based on mono or polybasic acids, as well as adducts thereof. These compounds are part of the general state of the art and are described, inter alia, in Lee & Neville,"Handbook of Epoxy Resins", MC Graw Hill Book Company, 1987, chapter 6-1 to 10-19.

Useful amines include polyamines distinguished by the fact that they carry at least two primary amino groups, in each case bonded to an aliphatic carbon atom. It can also contain further secondary or tertiary amino groups. Suitable polyamines include polyaminoamides (from aliphatic diamines and aliphatic or aromatic dicarboxylic acids) and polyiminoalkylene-diamines and polyoxyethylene-polyamines, polyoxypropylene-polyamines and mixed polyoxyethylene/polyoxypropylene-polyamines, or amine adducts, such as amine- epoxy resin adducts. Said amines may contain 2 to 40 carbon atoms. For example, the amines can be selected from polyoxyalkylene-polyamines and polyiminoalkylene-polyamines having 2 to 4 carbon atoms in the alkylene group, and have a number- average degree of polymerization of 2 to 100, other examples of amines can be linear, branched or cyclic aliphatic primary diaminoalkanes having 2 to 40 carbon atoms. In addition, said amines can be araliphatic amines having at least two primary amino groups, each of which are bonded to an aliphatic carbon atom. The curing composition (i.e. the curing agent and any additives prior to mixing with the epoxy resin) can include these amines in an amount ranging from 5 to 100% by weight, or for example in an amount ranging from 5 to 80% by weight and for example in an amount ranging from 10 to 70% by weight. Examples of suitable polyamines include: 1,2-diaminoethane, 1,2-diaminopropane, 1,3-diaminopropane, 1,4-diaminobutane and higher homologues, as well as2-methyl-1, 5-diaminopentane, 1,3-diaminopentane, 2,2,4-trimethyl-1, 6-diaminohexane and 2, 4,4-trimethyl-1, 6-diaminohexane as well as industrial mixtures thereof, 1-amino-3-aminomethyl-3, 5, 5-trimethylcyclohexane, 2,2- dimethyl-1, 3-diaminopropane, 1,3-bis (aminomethyl.) cyclohexane, 1,2-diaminocyclohexane, 1,3-bis (aminomethyl) benzene, bis (4-aminocyclohexyl) methane, bis (4-amino-3-methylcyclohexyl) methane, 3-azapentane-1, 5-diamine, 4-azaheptane- 1,7-diamine, 3, 6-diazaoctane-1, 8-diamine, benzyloxypropylaminepropylamine, diethylaminopropylamine, 3 (4), 8 (9)-bis (aminomethyl)tricyclo- [5. 2.1.02, 6] decane, 3- methyl-3-azapentane-1, 5-diamine, 3, 6-dioxaoctane-1, 8-diamine, 3, 6, 9- trioxaundecane-1, 11-diamine, 4,7-dioxadecane-1, 10-diamine, 4,7, 10-trioxatridecane- 1,13-diamine,4-aminomethyl-1, 8-diaminooctane, 2-butyl-2-ethyl-1, 5-diaminopentane, 3- (aminomethyl) benzylamine (MXDA),5-(aminomethyl) bicyclo [[2. 2.1] hept-2-yl]methylamine (NBDA), polyamino imidazoline (Versamid 140), as well as diethylenetriamine (DETA),triethylenetetramine (TETA, which is a mixture of several polyamines), pentaethylenetetramine, dimethyldipropylenetriamine, dimethylaminopropyl-aminopropylamine (DMAPAPA), N-2-(aminoethyl) piperazine (N- AEP),N- (3-aminopropyl) piperazine, norbornane diamine, epilink MX, isophorondiamine(IPD), diaminodicyclohexylmethane (PACM), dimethyldiaminodicyclohexyl methane (Laromin C260), tetramethylhexamethylenediamine (TMD), bis aminomethyl-dicyclopentadiene (tricyclodecyldiamine, TCD), diaminocyclohexane, diethylaminopropylamine (DEAPA), and the like. Suitable polyoxyalkylene polyamines can be obtained, for example, under the trade name Jeffamine such as polyoxypropylene triamine (Jeffamine T403) and polyoxypropylene diamine (Jeffamine D230), and suitable polyiminoalkylene polyamines are available, for example, under the trade name Polymin. Also mixtures from several amines are possible.

Primary aliphatic monoamines can also be added to the curing composition. Suitable monoamines include, for example, unbranched 1-aminoalkanes with for example a saturated alkyl radical of 6 to 22 carbon atoms. The higher representatives of this class of compounds also are called fatty amines. Non-limiting examples include laurylamine, stearylamine, palmitylamine and biphenylamine. However, monoamines with branched chains also are suitable, for example 2-ethylhexan-1-amine or 3,5, 5-trimethylhexan-1-amine. amino-2-butane, methoxypropylamine, isopropoxypropylamine. They can be employed individually or as a mixture, and in particular in an amount ranging from 0.1 to 10 %, and for example in an amount ranging from 1 to 5 %.

The amount of epoxy resin curing agent depends on the type of curing agent selected and the type of epoxy resin. Typically, the higher the molecular weight of the epoxy resin, the lower the quantity of curing agent required. The skilled person can easily find the quantity of curing agent required by considering the equivalent weight of epoxy in the epoxy resin and the equivalent weight of active hydrogen in the curing agent.

If appropriate, the curing composition or pre-cured epoxy composition according to the invention may additionally comprise a diluent that is inert. Examples of suitable diluents include aliphatic linear, branched or cyclic ethers having 4 to 20 carbon atoms and mixed aliphatic-aromatic ethers having 7 to 20 carbon atoms, such as dibenzyl ether, tetrahydrofuran, 1,2- dimethoxyethane or methoxybenzene; aliphatic linear, branched or cyclic or mixed aliphatic-aromatic ketones having 4 to 20 carbon atoms, such as butanone, cyclohexanone, methyl isobutyl ketone or acetophenone; aliphatic linear, branched or cyclic or mixed aromatic-aliphatic alcohols having 4 to 20 carbon atoms, such as methanol, ethanol, butanol, 2-propanol, isobutanol, isopropanol. benzyl alcohol, methoxypropanol or furfuryl alcohol ; aliphatic linear, branched or cyclic or mixed aromatic-aliphatic esters such as methoxypropyl acetate or DBE (dibasic esters from Dupont, mixture of dimethyl adipate, succinate and glutarate) ; aliphatic linear, branched or cyclic or mixed aromatic-aliphatic hydrocarbons such as toluene, xylene, heptane and mixtures of aliphatic and aromatic hydrocarbons having a boiling range above 100 C. under normal pressure, as well as low-viscosity coumarone-indene resins or xylene-formaldehyde resins. Aliphatic alcohols having one phenyl radical, such as benzyl alcohol, 1-phenoxypropane-2,3-diol, 3-phenyl-1-propanol, 2-phenoxy-1-ethanol, 1-phenoxy-2-propanol, 2-phenoxy-1-propanol, 2-phenylethanol, 1-phenyl-1-ethanol or 2-phenyl-1-propanol, are preferred. The diluents can be employed individually or as a mixture, and in particular in a amount ranging from 1 to 35 % by weight, for example in an amount ranging from 5 to 25% by weight and for example in an amount ranging from 10 to 30 % of the curing composition.

The pre-cured epoxy composition or the curing composition may also contain auxiliaries or additives such as solvents, colorants, mineral oils, fillers, elastomers, antioxidants, stabilizers, defoamers, extenders, plasticizers, catalysts, pigments, pigment pastes, reinforcing agents, flow control agents, thickening agents, flame-retarding agents, additional hardeners and additional curable compounds, depending on the application.

Curing of the composition according to the invention typically proceeds very rapidly, and in general can take place at a temperature within the range of from -10°C to +50°C, in particular from 0°C to 40°C, more in particular from 3°C to 20°C.

However, the curing of an epoxy coating material takes place after the addition reaction of amines or amides with the' oxirane rings in the epoxy resin. Hence the equivalence ratio of active hydrogen in the amine/amide compound relative to the epoxy groups contained in the coating material (i.e., the active hydrogen to epoxy group ratio), is preferably in the range 1:0.5 to 1:1.5.

Other Components

Any solvents used in the present invention are those which are capable of dissolving the epoxy resin and curing agent. Examples include hydrocarbons such as toluene or xylene, ethers such as diethylether, chlorinated hydrocarbons such as dichloromethane or tetrachloromethane, alcohols such as isopropyl alcohol, ketones such as methylethylketone, esters such as ethyl acetate, etc. The amount of solvent depends on the application but is typically in a ratio of between 1:5 to 10:1 by weight with respect to the epoxy resin and curing agent.

Specific pigments are those generally included in corrosion-resistant coating materials. Various rustproofing pigments can be used. Examples of extenders include general inorganic fillers such as titanium oxide and calcium carbonate. Example pigments include zinc powder (Zn), zinc phosphate, aluminium powder (Al) or zinc flowers (ZnO).

Other pigments that may be used include micacious iron oxide (MIO) and glass flakes. Catalysts for epoxy resins can be tertiary amines. Phenols can also be used as a curing catalyst.

Examples of additives include anti-sagging and antisettling agents, anti-floating/anti-flooding agents, antifoaming and anti-popping agents, levelling agents, and matting agents. An example of an anti-sagging/antisettling agent is an aliphatic bis-amide thixotropic agent. An example of an anti-floating/anti-flooding agent is an aliphatic polyhydric carboxylic acid with added silicone. An example of an anti-foaming/anti-popping agent is a speciality vinyl polymer (such agents are available from Kusumoto Chemicals, Ltd and include Disparlon 6900-20X, Disparlon 2100 and Disparlon 1950 respectively).

The epoxy based primer composition of the present invention can be manufactured in similar manner to an ordinary coating material based on an epoxy resin. That is to say, all the constituents other than the curing agent, are mixed with the epoxy resin to form a coating solution; the curing composition alone, or diluted with a solvent or the like, is used as the curing composition; and coating solution and curing composition are mixed immediately before use. In other words, the epoxy coating material composition of the present invention can be prepared as a so-called two-pack coating material.

As noted above, when a two-pack coating system is adopted, the pre-cured epoxy resin based composition and the curing composition are mixed immediately before the coating is to be applied. Coating application can be carried out by ordinary application methods such as brush, roller or spray. Coating application is carried out within a usable time interval after the coating solution and the curing agent have been mixed. The usable time is generally 30 minutes to 8 hours, and in the case of a solvent type coating material is from 3 to 8 hours. Drying is generally carried out at ordinary temperature, and drying time is generally from 8 to 24 hours.

The method of applying a corrosion and UV-resistant coating according to the present invention is a method wherein a topcoat is formed after at least one primer layer has been formed on the object being coated. A distinguishing feature of this method is that the topmost surface of the primer layer is formed using the above-described epoxy based primer composition of the invention.

Note that the rust preventive coating, primer coating, etc. may be applied to the surface of the object to be coated. In the method of applying a corrosion and UV-resistant coating according to the present invention, at least the topmost coating of the primer layer(s) is formed by applying the above-described epoxy based primer composition of the invention. The thickness of the coating film formed by application of this epoxy based primer composition will vary according to the intended use, etc., but is typically 30 to 800 $\mu$m in terms of dried film thickness, more typically, 30-400, most typically, 50-200$\mu$m. As noted above, drying is generally carried out at ordinary temperature and drying time is 8 to 24 hours.

The primer may be applied as multiple layers. It is therefore also possible to give the primer a laminated structure by applying the epoxy composition of the present invention a plurality of times so that there are multiple layers. There is no particular restriction on the quantity of coating applied each such time, but the coating material is generally applied so as to give the aforementioned dried film thickness of 10 to 500 $\mu$m per layer.

A topcoat that is typically used after the application of corrosion-resistant coatings can be used as the topcoat formed on a topmost primer layer that has been formed in the manner described above. For example, a conventional topcoat material can be used over the coating material used as the primer layer. Specific examples of topcoat coating materials include those based on oil-based coatings, long-oil phthalic acid resins, silicone alkyd resins, phenol resins, chlorinated rubber resins, epoxy resins, modified epoxy resins, tar epoxy resins, vinyl chloride resins, polyurethane resins, fluorine resins, and silicone modified resins. Acrylic resin or vinyl resin "antifouling coatings", which hinder the adhesion of organisms, may be used as functional coating materials. Among such coating materials, epoxy resins, polyurethane resins, alkyd resins and acrylic resins are particularly advantageous. Preferably, the top-coat is non-fused i.e. not applied by the application of heat to for instance a powder coating.

For the avoidance of doubt, references to "top coat, over coat or the like" herein are references to the coat applied directly (i.e. without an intermediary layer) over the topmost epoxy based primer composition coating and not the top-primer coat or a build coat unless indicated otherwise.

The dried film thickness of the topcoat is typically 30 to 800 $\mu$m per layer, more typically, 20-250$\mu$m, most typically, 50-200$\mu$m. Drying is generally carried out at ordinary temperature, and drying time is 8 to 24 hours. As in the case of the primer layer, the topcoat may also be applied as multiple layers.

The present invention enables the time interval between formation of the topmost primer layer and application of the topcoat to be lengthened. The detailed reasons for this are not clear, but it is clear that adding ZnO at high levels results in improved adhesion vis-à-vis the topmost primer layer-adjacent topcoat layer interface even when the overcoating interval is lengthened.

The epoxy coating material composition of the present invention gives excellent adhesion vis-à-vis a topcoat layer when used as the primer layer in the application of corrosion and UV-resistant coatings. In particular, because the time interval from formation of the primer layer to application of the topcoat can be lengthened, there is a greater degree of freedom in topcoat application than hitherto. Accordingly, the present invention will be particularly useful in the application of corrosion-resistant coatings on large structures such as ships.

Suitable epoxy based top-coats for the present invention may be based on the epoxy resin primer formulations detailed above with suitable topcoat additives known to the skilled person such as colour pigment and gloss additives.

**Polyurethane Based Topcoats**

Suitable polyurethane resin based topcoats are described in Chapter 16 of "Protective Coatings Fundamentals of Chemistry and Composition", Hare, Pittsburgh, 1994, the contents of which are incorporated herein by reference.

The polyurethane top-coats useful in combination with the primer of the present invention are typically two pack curing type polyurethane coating compositions derived from the combination of suitable polyols and isocyanates known to the skilled person.

POLYOLS

A suitable polyol for use in the topcoat composition is a polyhydric hydroxyl compound having at least two hydroxyl groups in the molecule, and includes, for example, saturated or unsaturated polyester polyols, polycaprolactone polyols, saturated or unsaturated, oil-modified or fatty acid-modified alkyd polyols, aminoalkyd polyols, polycarbonate polyols, acrylate polyols, polyether polyols, epoxy polyols, fluorine-containing polyols, saturated or unsaturated polyester resin, polycaprolactone resin, saturated or unsaturated, oil-modified or fatty acid-modified alkyd resin, aminoalkyd resin, polycarbonate resin, acrylic resin, polyether resin, epoxy resin, polyurethane resin, cellulose acetate butyrate and fluorine-containing resin.

Particularly preferred polyols are saturated or unsaturated polyester polyols, polyether polyols and acrylic polyols. More particularly preferred polyols are acrylate polyols. The acrylate polyol is not particularly restricted but may be any acrylic polyol having reactivity with polyisocyanate and examples thereof may include compounds obtained by polymerization of a mixture of unsaturated monomers selected from unsaturated monomers containing a hydroxyl group, unsaturated monomers containing an acid group, and other unsaturated monomers. Suitable acrylate polyols are hydroxy $C_{1-20}$ alkyl ($C_{0-8}$ alk) acrylates.

Examples of acrylate polyols include hydroxymethyl (meth)acrylate, hydroxyethyl (meth)acrylate, hydroxypropyl (meth)acrylate and hydroxybutyl (meth)acrylate, hexane diol diacrylate and trimethylol propane triacrylate. Other acrylate polyols include N-methylol (meth)acrylate, diethyleneglycol mono (meth)acrylate, and polypropylene glycol mono (meth)acrylate As mentioned above, the acrylate polyols are typically co-polymerised with suitable unsaturated co-monomers such as $C_{1-6}$ alkyl ($C_{0-8}$ alk)acrylates and their acid equivalents for example methyl (meth)acrylate, ethyl (meth)acrylate, propyl (meth)acrylate, butyl (meth)acrylate, isopropyl (meth)acrylate, isobutyl (meth)acrylate, 2-ethyl-hexyl (meth) acrylate, lauryl (meth) acrylate, n-octyl (meth)acrylate, n-dodecyl (meth)acrylate, (meth)acrylic acid, crotonic acid, itaconic acid, fumaric acid, maleic acid, dibutyl fumarate, dibutyl maleate, aryl alcohol, vinylalcohol ester type monomers such as esters of carboxylic acids, e.g. acetic acid and propionic acid with vinyl alcohol, unsaturated hydrocarbon monomers such as styrene, α-methylstyrene, vinyl naphthalene, butadiene, and isoprene, nitrile type monomers such as acrylonitrile and methacrylonitrile, and acrylamide type monomers such as acrylamide, methacrylamide, N-methylolacrylamide, N,N-dimethylacrylamide, and diacetoneacrylamide.

Suitable polyether polyols and their manufacture are described, for example, in the Encyclopaedia of Polymer Science and Technology 6,273 et seq., in Kirk-Othmer (3rd edition), Vol. 18, 633 to 645 et seq., or in Ullmann (4th edition), Vol. 19, 31 to 38. '

ISOCYANATES

The polyisocyanates which can be used to crosslink the polyols when used with the invention are typical paint polyisocyanates. The polyisocyanate is a compound containing two or more isocyanate groups. The paint polyisocyanates are typically oligomeric derivatives, containing biuret, urethane, uretidinone and/or isocyanurate groups, of readily available monomeric or simple diisocyanates. Suitable isocyanates include aliphatic, cycloaliphatic and aromatic polyisocyanates, such as hexamethylene diisocyanate (HDI), bis(isocyanatocyclohexyl)methane (HMDI), trimethylhexamethylene diisocyanate, isophorone diisocyanate (IPDI), 4,4'-diisocyanatodicyclohexylmethane, tolylene2,4-diisocyanate, o-, m- and p-xylylene diisocyanate; capped polyisocyanates, such as polyisocyanates capped with CH--, NH-- or OH-acidic compounds; and also, for example, polyisocyanates containing biuret, allophanate, urethane or isocyanurate groups. Preferred isocyanates are aliphatic isocyanates such as HDI and IPDI.

ADDITIVES

The polyurethane topcoat additives which are to be used if appropriate can be added either to the mixture or to the individual components prior to their mining.

Suitable solvents for polyurethane top coats include acetates, ketones and non functional group containing aromatic compounds such as ethyl acetate, butyl acetate, methylethyl ketone, methyl isobutyl ketone, ethylene glycol monoethylether acetate, methoxypropyl acetate, toluene, xylene, white spirit, ethoxypropyl acetate, ethoxyethyl propionate, methoxybutyl acetate, butyl glycol acetate, solvent naphtha, and mixtures of these solvents. The solvents are used in a quantity of up to 70% by weight, preferably up to 40% by weight, based on the weight of the topcoat composition.

Further additives to be used if required are, for example, plasticizers such as, for example, tricresyl phosphate, phthalic diesters or chloroparaffins ; pigments such as colour pigments, bright pigments, and extender pigments and fillers, such as titanium oxide, barium sulphate, chalk, carbon black; catalysts such as, for example, N,N-dimethylbenzylamine, N-methylmorpholine, zinc octoate, tin(II) octoate and dibutyltin dilaurate ; levelling agents; thickeners; stabilizers, such as substituted phenols or organ functional silanes. Adhesion promoters and light stabilizers may also be utilised for example, sterically hindered amines, as are described, inter alia, in U.S. Pat. Nos. 4,123,418, 4,110,304, 3,993,655 and 4,221,701.

Typically, the top-coat or overcoat of the preset invention is not a polyamide based coating. For the avoidance of doubt, the term polyamide based coating does not extend to coatings based on other resins but which contain polyamide such as polyamide cured epoxy resins.

## Alkyd Resin Based Topcoats

Suitable alkyd resin based topcoats are described in Chapter 12 of "Protective Coatings Fundamentals of Chemistry and Composition", Hare, Pittsburgh, 1994, the contents of which are incorporated herein by reference.

Typically, the alkyd resin comprises any suitable combination of polyhydric alcohol and polybasic acid, preferably with a modifying oil, typically, such modifying oil is a long chained, unsaturated, monobasic carboxylic acid. Preferably, the modifying oil is a drying oil or, in the case of a non-drying oil such as castor or coconut oil, the alkyd resin includes a suitable formaldehyde resin to give cross-linked films.

In alkyd resins generally, the polyhydric alcohols, polybasic acids, modifying oils, other modifying components and additives may be selected from any suitable components known to those skilled in the art of alkyd resins. Examples of these components fellow hereafter.

The polyhydric alcohols may be selected from ethylene glycol, neopentyl glycol, glycerol, trimethylol propane, pentaerythritol, preferably, glycerol, trimethylol propane or pentaerythritol or mixtures of any of the foregoing; the polybasic acids may be selected from benzoic acid, abietic acid, phthalic anhydride, isophthalic anhydride, isophthalic acid, terephthalic acid and trimellitic anhydride, preferably, orthophthalic anhydride, isophthalic acid and terephthalic acid, most preferably, orthophthalic anhydride or mixtures of any of the foregoing; the modifying oils may be selected from tung oil, linseed oil, tall oil, dehydrated castor oil, safflower oil, fish oils and soya oil; the other modifying components or modified alkyds may be selected from rosin ( abietic acid) for improved drying, other monobasic acids ( egg benzoic acids) as chain terminators, long chain aliphatic dibasic acids (e.g. adipic and azelaic acids) for flexibility, maleic anhydride (e.g. at levels of 0.5-10% of the polybasic acid content) to upgrade colour and water resistance, highly functional acids (e.g. trimellitic and pyromellitic anhydride) to produce high acid value products or for use in water borne alkyd products, chlorendric anhydride for non-flaming coatings, phenolic resins to upgrade adhesion and resistance to corrosion and water, vinyl modified alkyds (e.g. styrenated alkyds, vinyl-toluenated alkyds, and acrylic-modified alkyds) for faster drying, water resistance, alkali resistance and improved colour - optionally further modified with amino formaldehyde resins for improved oil resistance, polyamide-modified alkyds (e.g. post addition polyamide reacted or cooked in polyamide resin in either case optionally including other thixotropes such as montmorillonite) to introduce a controlled level of thixotropy, and uralkyds (e.g. by replacement of some of the dibasic acid with 15-30% diisocyanate such as toluene diisocyanate in the final product)for high alkali, abrasion and chemical resistance, lower toxicity and fast drying.

In addition to the modified alkyds above, the alkyds may be high, medium or low solids. In medium and low solids alkyds conventional driers may be used but in high solids driers such as reactive aluminium, zirconium, vanadium and neomidium based products and heterocyclic amines such as 1,10-phenanthraline or 2,2-dipyridyl are favourable. High solids alkyds may also benefit from co-solvents such as lower alkyl alcohols and lower molecular weight ketones or blocking agents such as acetic anhydride and chlorotrimethyl silane.

Furthermore, the above alkyds may be water borne by the use of neutralising amines such as ammonia, monoethanolamine, aminomethylpropanol, morpholine, diethylamide, dimethylamine, dimethylethanol amine, dimethylethylamine, triethylamine, diethanolamine and triethanolamine. Such water borne systems may include hydrolytically stable driers such as 1,10-phenanthraline or 2,2-dipyridyl in combination with conventional driers and co-solvents. Suitable co-solvents in water borne systems include alcohols such as butanol, octanol and diacetone alcohol, glycol ethers such as ethylene glycol monobutyl ether and diethylene glycol monobutyl ether , and others such as methyl ethyl ketone and n-methyl-2-pyrrolidone.

## Epoxy ester Based Topcoats

Alkyd similar epoxy ester based topcoats may also be used. These are similar to the alkyds mentioned above except that the presence of a polybasic acid is not essential and typically, the epoxy-based resin is reacted with the fatty acid oil or (meth)acrylic acid to produce the ester linkage. Suitable oils are the same as those for the alkyds mentioned above. The epoxy esters may also be modified in similar ways to the alkyds mentioned above.

## Acrylic Resin Based Topcoats

Suitable acrylic resin based topcoats are described in Chapter 8 of "Protective Coatings Fundamentals of Chemistry and Composition", Hare, Pittsburgh, 1994.

Suitable topcoats which are acrylic resin based include those derived from thermoplastic acrylic resins including water soluble acrylic resins; and thermosetting acrylic resins which may be crosslinked during the curing process.

The acrylic resins may be formed from one or more acrylic monomers selected from the C1-C6alkyl(C0-C8 alk)acrylates and their corresponding acids or functionalised acrylates of the aforesaid. Co-monomers may be selected from one or more different C1-C20alkyl(C0-C8 alk)acrylates or their corresponding acids, or functionalised acrylates of the aforesaid, or may alternatively be selected from a different vinylic co-monomer such as styrene, alpha methyl styrene, vinyl alcohol, vinyl toluene, vinyl chloride, vinylidene chloride, butadiene, ethylene, butyl fumarate, butyl maleate, vinyl acetate or the like.

Suitable functionalised acrylates include those wherein the alkyl group is replaced with a functionalised group such as epoxy, hydroxyalkyl or amine groups for example glcidyl methacrylate, 2-hydroxyethyl acrylate or acrylamide. Alternatively, the acrylic group may be functionalised by introduction of functional groups on the vinylic carbons such as halogen or hydroxyl groups.

Still further, the acrylic monomers may be multifunctional in the sense of having two or more vinyl groups, examples of which include hexane diol diacrylate and trimethylol propane triacrylate.

Suitable, acrylates include methyl methacrylate, ethyl methacrylate, methyl acrylate, ethyl acrylate, butyl acrylate, lauryl methacrylate, acrylic acid and methacrylic acid.

The acrylic polymers can be post polymerisation functionalised , particularly when producing thermosetting polymers by reaction of free functional groups such as terminal or pendant (alk)acrylic acid, acrylamide, methylol, butoxymethyl acrylamide, acrylate or hydroxyl groups with other agents such as epoxies, amines, aminoplasts , isocyanates, formaldehyde or other hydroxyl, butoxymethyl acrylamide, acrylate or acid functionalised polymer chains. Such post polymerisation reactions and their conditions are known to those skilled in the art to produce suitable cross linking of the polymer network either prior to or as part of the curing step.

The acrylic polymers can be blender with other acrylic or compatible non-acrylic polymers to produce polymer blends having the appropriate coating properties.

Pigments, solvents and additives for all the topcoats may also be the same as given above with respect to epoxy coatings and, in any case, are well known in the art.

Optionally, further topcoat layers can be applied to produce a multi-layer top-coat.

The epoxy based primer coating compositions of the invention exhibit improved primer to top-coat delamination inhibition and/or adhesion. By improved in this context is typically meant having suitability for an increased, for instance, greater than 50 day, overcoating interval.

Typically, the overcoating interval i.e. the interval of time between applying the topmost primer layer composition of the invention and at least the initial top-coat is at least 10 days, more typically, more than 30 days, most typically more than 45 days. Typically, the overcoating interval is 10-500 days, more typically, 20-400 days, most typically, 30-300 days, especially 60-300 days.

Typically, the zinc oxide of the present invention may have high purity. The zinc oxide of the invention is generally produced either by the "direct" (American) process, or the "indirect" (French) process. The "direct" process was developed to treat oxidised ores or sulphide concentrates but more recently this process principally uses residues from the zinc processing industry as its main raw material. These residues are purified and treated and mixed with carbon in a furnace to form zinc vapour. The zinc gas is then drawn into a combustion chamber where it is oxidised to form pure zinc oxide. In the "indirect" process, zinc oxide is made from zinc metal which has been vaporised and then oxidised in a combustion zone. Special High Grade (SHG) zinc metal, as well as recycled zinc metal is used as starting material. A third method of production involves precipitation of zinc carbonate or hydroxide, which is then dried and calcined to remove water and/or carbon dioxide.

Surprisingly, the use of "indirect" process ZnO shows generally higher levels of delamination inhibition than that found using ZnO from the "direct" process. Therefore, preferably, the overcoating primer delamination inhibition of the present invention uses zinc oxide provided by the "indirect" process.

Typically, the purity level of zinc oxide in the present invention is greater than 99.4% w/w (dry), more preferably, greater than 99.5% w/w (dry) and most preferably, greater than 99.6% w/w (dry).

The level of zinc oxide in the epoxy based primer composition is typically 10-70% w/w (dry), more typically 15-50% w/w (dry), most typically 20-50% w/w (dry), especially 25-35% w/w (dry).

Advantageously, the ZnO containing primer coating of the present invention is preferably, not treated with alkaline and/or sanding techniques.

The compositions according to the invention can find various industrial applications because of their favourable anti-delamination and anti-corrosive properties. Typical industrial applications for the curing compositions of the invention include, for example, use for the production of coatings and/or intermediate coatings on many types of metal substrates, for example, sheet steel, cast iron, aluminium and nonferrous metals, such as brass, bronze and copper. In particular, the compositions of the invention can be used as paints and coatings for coating industrial objects and, in particular, in the shipbuilding industry for ships hulls, including blocks for shipbuilding. In the latter case, blocks may be for hulls or other components such as ballast tanks.

The compositions can be applied, for example, by brushing, spraying, dipping and the like.

The invention will be more readily understood by reference to the following examples and figures, which are included merely for purposes of illustration of certain aspects and embodiments of the present invention and are not intended to limit the invention.

The reference formulations and formulation 1-7 were generally produced as follows:-

- the epoxy base resin and most of the solvent were charged to a high speed grinder vessel

- the pigments, fillers, ZnO and other additives were then charged to the vessel

- a high-speed dissolver blade for grinding was then activated until the required fineness of the grind was obtained

- the ground material was then taken to a certain max temperature to activate the thixotropic agent

- the ground material was maintained at this elevated temperature (often 60-65 C, depending on type of thixotropic agent) for a certain period of time, often 15-30 minutes

- the paint was then finished by addition of the remaining solvent, additives and resins.

Table 1

| Epoxy formulations 1-3 and Reference Formulation 1(a), 1(b) & 1(c) | | |
|---|---|---|
| **BASE** | **Reference 1(a)** | **Formulation 1** |
| Epikote 1001X75 | 18.17 | 15.88 |
| Dowanol PM | 3.13 | 2.73 |
| Urea/formaldehyde resin | 1.77 | 1.55 |
| Alkyl-phenol | 1.32 | 1.15 |
| | | |
| Bentone SD 2 | 0.16 | 0.14 |
| Talc | 13.98 | 5.75 |
| Silica flower | 15.13 | 7.19 |
| Aluminium paste 65% | 5.26 | 4.60 |
| Iron oxide - red | 6.00 | 5.25 |
| Zinc oxide | | 25.16 |
| Xylene | 5.00 | 8.00 |
| | | |
| Nebothix C668 | 0.82 | 0.72 |
| A187 epoxy silane | 0.21 | 0.18 |
| | | |
| Xylene | 11.29 | 7.35 |
| | | |
| **Hardener** | | |
| | | |

(continued)

| Hardener | | |
|---|---|---|
| Polyamide 115 | 6.36 | 5.54 |
| Xylene | 9.34 | 7.01 |
| Dowanol PM | 0.99 | 0.87 |
| Isobutyl alcohol | 1.07 | 0.93 |
| | | |
| Total (parts on weight) | 100.00 | 100.00 |

Formulation 1 was specifically prepared as follows:

Epikote 1001X75, Dowanol PM, Urea/formaldehyde resin and Alkyl-phenol were charged to a high speed grinder vessel. Bentone SD 2, talc, silica flower, aluminium paste (65%), iron oxide - red, zinc oxide (not present in reference 1) and xylene were then charged to the vessel. The high speed dissolver blade for grinding was then activated until the required fineness of the grind had been obtained. The grind material was then taken to 65°C and Nebothix C668 and A187 epoxy silane were added. The ground material was maintained at this temperature for 25 minutes.

The epoxy formulation was stored in this manner until ready to be coated. Prior to coating, the hardener consisting of polyamide 115, xylene, Dowanol PM and isobutyl alcohol were stirred into the epoxy formulation to effect curing.

Detailed description of preparation of the remaining formulations and reference examples is generally according to formulation 1 with the amounts of the components varied as shown.

Characteristics:

Formulations 1-3 and reference examples 1(a), 1(b) and 1(c) are

```
medium solid epoxy / polyamide primers, volume solids =
50%
```

The ZnO concentration under test is as follows: -

- wet paint: max 25 % (w/w)
- dry paint: max 36 % (w/w).
- Further formulations with ZnO at 24% (3) and 12% (2) in the dry paint were also prepared in accordance with formulation 1. Reference examples 1(a), 1(b) & 1(c) have 0%, 2% & 5% ZnO respectively.

Result: after 3 months, excellent inter coating adhesion with a two component polyurethane and the 24% and 36% versions was found. The 12% formulation also showed positive results. On the other hand, reference coatings 1(a), 1(b) and 1(c) showed unacceptably high levels of delamination with several top-coats tested.

The topcoats analysed in the tests are as indicated in the results tables.

Table 2

| Epoxy Formulations 4-6, yellow/green | | |
|---|---|---|
| Raw Material | Reference 2 | Formulation 4 |
| | w/w | |
| Bisphenol A epoxy 1001 | 17.95 | 15.61 |
| Urea resin | 1.72 | 1.50 |
| Alkyl-phenol | 1.29 | 1.12 |

(continued)

| Epoxy Formulations 4-6, yellow/green | | |
|---|---|---|
| Raw Material | Reference 2 | Formulation 4 |
| | | |
| Talc | 19.00 | 8.26 |
| Silica flower | 12.89 | 5.61 |
| Aluminium paste | 5.41 | 4.71 |
| Iron oxide yellow | 5.76 | 5.01 |
| Zinc oxide | ------ | 26.92 |
| | | |
| A 187 epoxy silane | 0.21 | 0.18 |
| Amide thixotropic agent | 1.29 | 1.12 |
| | | |
| Aliphatic ether alcohol | 1.80 | 1.57 |
| Xylene | 17.88 | 15.55 |
| Isobutanol | 5.76 | 4.99 |
| Solvesso 150 | 4.60 | 4.00 |
| | | |
| Polyamide 140 | 3.74 | 3.24 |
| Catalyst | 0.70 | 0.61 |
| | | |
| Total (parts on weight) | 100.00 | 100.00 |

Characteristics:

Formulations 4-6 and reference examples 2 are medium solid epoxy primers, volume solids = 50%
The ZnO concentration under test is as follows:

- wet paint: max 27 % (w/w)
- dry paint: max 37 % (w/w). Further formulations 25% (5) and 12.5% (6) in the dry paint were also prepared in accordance with formulation 4.

Result after 3 months: excellent results with 25% and 37% formulations. The 12% formulation was also positive. Topcoats analysed are as indicated in the results tables.

Table 3

| Epoxy Formulations 7-10, grey | | |
|---|---|---|
| Raw Material | Reference 3 | Formulation 7 |
| | | |
| Bisphenol A epoxy 1001 | 19.02 | 15.88 |
| Araldite DY-P | 1.24 | 1.03 |
| Urea resin | 1.87 | 1.56 |

(continued)

| Epoxy Formulations 7-10, grey | | |
|---|---|---|
| Raw Material | Reference 3 | Formulation 7 |
| Alkyl-phenol | 2.24 | 1.86 |
| Vestinol AH | 3.64 | 3.04 |
| | | |
| Talc | 21.50 | 8.96 |
| Silica flower | 18.64 | 7.79 |
| Aluminium paste | 4.46 | 3.73 |
| Zinc oxide | ------ | 33.34 |
| | | |
| A 187 epoxy silane | 0.22 | 0.18 |
| Polysiloxane | 0.23 | 0.19 |
| Amide thixotropic agent | 1.31 | 1.10 |
| | | |
| Aliphatic ether - alcohol | 1.22 | 1.02 |
| Xylene | 13.76 | 11.47 |
| Isobutanol | 3.32 | 2.76 |
| Solvesso 150 | 2.20 | 1.83 |
| | | |
| Polyamide 140 | 4.51 | 3.75 |
| Catalyst | 0.62 | 0.51 |
| | | |
| Total (parts on weight) | 100.00 | 100.00 |

Characteristics:

Formulations 7-10 and reference examples 3 are Medium - high solid epoxy primers, volume solids = 63 %

The ZnO concentration under test is as follows:

- wet paint: max 33 % (w/w)
- dry paint: max 41 % (w/w). Further formulations 8-10 having dry solids at 10%, 20% and 30% were also prepared in accordance with example 7.

Result: after 3 month's overcoating interval, excellent results with 30 % and 41% versions. Positive results for 20% and 10% versions were also obtained. Top coats analysed are as indicated in the results tables.

Table 4

| Epoxy Formulations 11-13, yellow-green | | |
|---|---|---|
| **Raw Material** | **Reference 4** | **Formulation 11** |
| | | |
| Bisphenol A epoxy 828 | 24.93 | 21.26 |
| Bisphenol F epoxy | 1.88 | 1.60 |
| Araldite DY-K | 1.88 | 1.60 |

(continued)

| Raw Material | Reference 4 | Formulation 11 |
|---|---|---|
| Hydrocarbon resin | 5.72 | 4.88 |
|  |  |  |
| China clay | 22.24 | 9.46 |
| Talc | 11.54 | 4.87 |
| Iron oxide yellow | 3.40 | 2.88 |
| Aluminium paste | 3.26 | 2.78 |
| Zinc oxide | ------ | 29.27 |
|  |  |  |
| A 187 epoxy silane | 0.25 | 0.21 |
| Dispersing agent | 0.14 | 0.12 |
| Polysiloxane agent | 0.25 | 0.21 |
| Amide thixotropic agent | 1.39 | 1.19 |
| Xylene | 8.85 | 7.55 |
| Isobutanol | 3.14 | 2.68 |
| Benzyl alcohol | 3.80 | 3.22 |
|  |  |  |
| SHO-Amine X100 | 3.03 | 2.57 |
| Polyether amine | 2.92 | 2.48 |
| Bisphenol A | 0.87 | 0.74 |
| Catalyst | 0.51 | 0.43 |
|  |  |  |
| Total (parts on weight) | 100.00 | 100.00 |

Characteristics:

Formulations 11-13 and reference example 4 are high solid epoxy primers, volume solids = 80 %

Range of ZnO concentration under test:

- wet paint: max 29 % (w/w)
- dry paint: max 33 % (w/w). Formulation 12 and 13 with dry solids 11 and 22% were prepared in accordance with formulation 11.

Result after 3 months: 33% version shows excellent results, 22% shows good result and 11% shows better results than the reference.

Topcoats analysed are as indicated in the results tables.

Table 5

| Epoxy Formulation 14-16, grey | | |
|---|---|---|
| Raw Material | Reference 5 | Formulation 14 |
|  |  |  |
| Bisphenol A epoxy 828 | 35.10 | 32.40 |
|  |  |  |

(continued)

| Epoxy Formulation 14-16, grey | | |
|---|---|---|
| Raw Material | Reference 5 | Formulation 14 |
| Titanium dioxide | 3.45 | 3.19 |
| Talc | 34.54 | 15.96 |
| Aluminium paste | 3.63 | 3.35 |
| Zinc oxide | | 23.94 |
| | | |
| A 187 epoxy silane | 0.43 | 0.40 |
| Polysiloxane agent | 0.26 | 0.24 |
| Amide thixotropic agent | 0.86 | 0.80 |
| | | |
| Benzyl alcohol | 10.55 | 9.69 |
| | | |
| Isophoron diamine | 3.27 | 2.94 |
| Polyether amine | 7.09 | 6.36 |
| Salicylic acid | 0.27 | 0.24 |
| Catalyst | 0.55 | 0.49 |
| | | |
| Total (parts on weight) | 100.00 | 100.00 |

Characteristics:

Formulation 14 is a solvent-Free epoxy primer, volume solids = 100 %
Range of ZnO concentration under test:

- wet paint: max 24 % (w/w)
- dry paint: max 24 % (w/w) also, formulations 15 and 16 having 8 % and 16 % (w/w) were prepared according to formulation 14.

Result after 3 months: excellent result for 24% version. Positive result for 16%. The 8% version showed same performance as the standard (0%).
Topcoats analysed are as indicated in the results tables.

Table 6

| Epoxy Formulations 17-19, Red Brown | | |
|---|---|---|
| Raw Material | Reference 6 | Formulation 17 |
| | | |
| Bisphenol A epoxy 1001 | 11.63 | 10.08 |
| Bisphenol A epoxy 828 | 7.05 | 6.10 |
| Hydrocarbon resin | 5.85 | 5.08 |
| | | |
| Talc | 17.47 | 7.58 |
| Silica flower | 13.77 | 5.97 |

(continued)

| Epoxy Formulations 17-19, Red Brown | | |
|---|---|---|
| Raw Material | Reference 6 | Formulation 17 |
| Aluminium oxide | 6.03 | 5.23 |
| Iron oxide red | 4.30 | 3.73 |
| Zinc oxide | ------ | 26.89 |
| | | |
| Amide thixotropic agent | 1.29 | 1.12 |
| | | |
| Benzyl alcohol | 6.18 | 5.35 |
| Xylene | 15.00 | 13.00 |
| Isobutanol | 5.09 | 4.40 |
| Polyamide 140 | 5.64 | 4.87 |
| Catalyst | 0.70 | 0.60 |
| | | |
| Total (parts on weight) | 100.00 | 100.00 |

Characteristics:

Formulation 17 and reference 6 is a medium-high solid epoxy buildcoat, volume solids = 68 %
Range of ZnO concentration under test:

- wet paint: max 27 % (w/w)
- dry paint: max 32 % (w/w) also, formulation 18 and 19 10% and 21% w/w were prepared according to formulation 17.

Result after 3 months: excellent results for 21% and 32% versions. A positive result was also obtained for the 10% version.
Topcoats analysed are as indicated in the results tables.

Table 7

| Epoxy Formulation 20, Grey | |
|---|---|
| Raw Material | 20 |
| | |
| Bisphenol A epoxy 1001 | 16.46 |
| Urea resin | 1.75 |
| Alkyl-phenol | 1.32 |
| | |
| Talc | 13.16 |
| Carbon black | 0.22 |
| Aluminium paste | 4.39 |
| Titanium dioxide | 7.02 |
| zinc oxide | 26.32 |
| | |
| A 187 epoxy silane | 0.22 |

(continued)

| Epoxy Formulation 20, Grey | |
|---|---|
| Amide thixotropic agent | 0.88 |
| Bentone SD 2 | 0.18 |
| | |
| Dowanol PM | 3.33 |
| Xylene | 13.17 |
| Isobutanol | 2.63 |
| | |
| Polyamide 115 | 7.72 |
| Catalyst | 1.23 |
| | |
| Total (parts on weight) | 100.00 |

Medium solid epoxy - Vol solids = 60 %

- wet paint: 26 % (w/w)
- dry paint: 33.5 % (w/w)

Result after 5 months are as indicated in the results tables.

Description of the method to determine intercoat adhesion:

- apply the epoxy primer on Sa 2.5 cleaned blasted steel panels, profile Rz 30-60 micron

- allow the coating to dry for a period of 1-3 days at room temperature, normal ventilation conditions

- expose the primer panel outdoors, facing south, at a 60 degree angle to the ground

- at 1, 3, 6, 9 and 12 month intervals, take panel inside and remove any dirt by cleaning with water and allowing the surface to dry for > 2 hours

- topcoat is then applied by brush, air spray or airless spray at a thickness of 40 to 150 microns

- the topcoat is then fully cured - usually 7 days at 20 C

- the adhesion of the system is then checked in dry conditions, by means of X-cut peeling by knife (ASTM D3359)

- wet adhesion is then checked by immersing the panels in water for at least 2 weeks

- check adhesion immediately after taking out of the water, by means of X-cut peeling by knife testing (ASTM D3359)

- although the method is the same as the ASTM method above, the adhesion scores are sequenced inversely, meaning the following key applies in the results tables

    0 = no delamination, impossible to penetrate between coats
    1 = traces of delamination, very hard to penetrate between coats
    2 = minimal delamination, it is possible to penetrate between coats
    3 = partial delamination, fairly easy to penetrate between coats
    4 = severe delamination, easy penetration between coats
    5 = complete delamination, topcoat can be fully removed as a free film

## Results Table 1 Epoxy Formulation 1-3, Red Brown

Results for Formulations 1-3 (Red Brown) and reference examples 1(a), 1(b) 1(c), o/c interval 3 months, adhesion scores dry (d)/wet(w)

Results Table 1(a)

| Topcoat | Dur 550 | | Cover 456 | | Cover 515 | | Cover 630 | | BT | | MG | | TS | | Self | |
|---|---|---|---|---|---|---|---|---|---|---|---|---|---|---|---|---|
| Primer | d | w | d | w | d | w | d | w | d | w | d | w | d | w | d | W |
| 0 % | 1 | 5 | 0 | 5 | 0 | 0 | 0 | 4 | 1 | 4 | 0 | 1 | 0 | 0 | 0 | 4 |
| 2% | 1 | 5 | 0 | 4 | 0 | 0 | 0 | 4 | 1 | 5 | 0 | 2 | 0 | 0 | 0 | 3 |
| 5% | 1 | 5 | 0 | 4 | 0 | 0 | 0 | 1 | 1 | 5 | 0 | 0 | 0 | 0 | 0 | 3 |
| 12% | 0 | 4 | 0 | 1 | 0 | 0 | 0 | 1 | 0 | 3 | 0 | 0 | 0 | 0 | 0 | 1 |
| 24% | 0 | 1 | 0 | 0 | 0 | 0 | 0 | 1 | 0 | 2 | 0 | 0 | 0 | 0 | 0 | 0 |
| 36% | 0 | 0 | 0 | 0 | 0 | 0 | 0 | 0 | 0 | 1 | 0 | 0 | 0 | 0 | 0 | 0 |

Results for Formulations 1-3 (Red Brown) and reference examples 1(a), 1(b) & 1(c), o/c interval 6 months, adhesion scores dry (d)/wet (w)

Results Table 1(b)

| Pri / Top | MG | | TS | | Self | | BT | | 800 | | Cover 630 | |
|---|---|---|---|---|---|---|---|---|---|---|---|---|
| | d | w | d | w | d | w | d | w | d | w | d | W |
| 0% | 0 | 4 | 0 | 4 | 0 | 5 | 1 | 5 | 0 | 5 | 1 | 5 |
| 2% | 0 | 4 | 0 | 4 | 0 | 5 | 1 | 5 | 0 | 5 | 1 | 5 |
| 5% | 0 | 3 | 0 | 4 | 0 | 5 | 1 | 4 | 0 | 5 | 1 | 4 |
| 12% | 0 | 1 | 0 | 0 | 0 | 0 | 0 | 2 | 0 | 0 | 0 | 1 |
| 24% | 0 | 0 | 0 | 0 | 0 | 0 | 0 | 1 | 0 | 0 | 0 | 2 |
| 36% | 0 | 0 | 0 | 1 | 0 | 0 | 0 | 1 | 0 | 0 | 0 | 4 |

Results Table 1(c)

| Pri / Top | Gloss | | Cover 456 | | BTD | | TAF | | Cover 350 | | Cover 515 | |
|---|---|---|---|---|---|---|---|---|---|---|---|---|
| | d | w | D | w | d | w | d | w | d | w | d | W |
| 0% | 1 | 5 | 0 | 4 | 0 | | 1 | | 0 | 0 | 0 | 0 |
| 2% | 1 | 5 | 0 | 4 | 1 | | 0 | | 0 | 0 | 0 | 0 |
| 5% | 0 | 5 | 0 | 3 | 1 | | 0 | | 0 | 0 | 0 | 0 |
| 12% | 0 | 5 | 0 | 1 | 0 | | 0 | | 0 | 0 | 0 | 0 |
| 24% | 0 | 4 | 0 | 2 | 0 | | 0 | | 0 | 0 | 0 | 0 |
| 36% | 0 | 2 | 0 | 3 | 0 | | 0 | | 0 | 0 | 0 | 0 |

Key:

Dur 550, 1800 - Sigmadur range (polyurethanes): 550, 1800 Cover 456, 515, 630, 650 - Sigmacover range (epoxy): 456, 515, 630, 650
MG- Multiguard or Sigmashield 420

TS - Tankshield Coating or Sigmaguard 440
BT - Sigmaguard BT or Sigmaguard 425
TAF- Topacryl Finish (1k) or Sigma Vikote 56
BTD- Sigmarine BTD (1k) or Sigmamarine 48
Self- topcoat is the same coating material as the primer Cover 350 - Sigmacover 350
800 - SigmaPrime 800
The Polyurethane top-coats above are all acrylic polyol cured with aliphatic polyisocyanate.
The Epoxy top-coats are polyamide or polyamine cured, pure or modified, medium solids and solvent free.

All Sigma- products are available from SigmaKalon B.V.

**Epoxy Formulation 4-6, Primer y/green**

Results Table 2

| Results for primer y/green, o/c period 3 months, adhesion scores dry / wet | | | | | | | | | |
|---|---|---|---|---|---|---|---|---|---|
| Primer / Top | Dur 550 | | Cover 456 | | Cover 350 | | MG | | Self | |
|  | d | w | d | w | d | W | d | w | d | w |
| 0 % | 1 | 5 | 1 | 4 | 0 | 1 | 1 | 2 | 0 | 3 |
| 12% | 0 | 4 | 0 | 3 | 0 | 0 | 0 | 0 | 0 | 0 |
| 25% | 0 | 0 | 0 | 0 | 0 | 0 | 0 | 0 | 0 | 0 |
|  | 0 | 0 | 0 | 3 | 0 | 0 | 0 | 0 | 0 | 0 |

**Epoxy Formulation 7-10, Primer X-3 grey**

Results Table 3

| Results for primer X-3 grey, overcoating interval 3 months, adhesion score dry / wet | | | | | | | | | |
|---|---|---|---|---|---|---|---|---|---|
| Primer / Top | Dur 550 | | Cover 456 | | Cover 350 | | MG | | Self | |
|  | d | w | d | w | d | W | d | w | d | w |
| 0 % | 2 | 4 | 4 | 4 | 0 | 2 | 0 | 2 | 0 | 3 |
| 10 % | 1 | 4 | 2 | 3 | 0 | 0 | 0 | 1 | 0 | 1 |
| 20 % | 0 | 3 | 0 | 3 | 0 | 1 | 0 | 0 | 0 | 1 |
| 30 % | 0 | 1 | 0 | 1 | 0 | 0 | 0 | 0 | 0 | 0 |
| 40 % | 0 | 0 | 0 | 2 | 0 | 0 | 0 | 0 | 0 | 0 |

**Epoxy Formulation 11-13, Primer X-4 green**

Results Table 4

| Results for Primer X-4 green, o/c interval 3 months, adhesion scores dry / wet | | | | | | | | | | | | | | | |
|---|---|---|---|---|---|---|---|---|---|---|---|---|---|---|---|
| Pri /Top | Dur 550 | | Cover 456 | | cover 515 | | Cover 630 | | BT | | MG | | BTD | | Self | |
|  | D | w | d | w | d | w | d | w | d | w | d | w | d | w | d | w |
| 0 % | 1 | 5 | 2 | 4 | 0 | 5 | 1 | 5 | 4 | 5 | 4 | 5 | 2 | 5 | 3 | 5 |
| 11 % | 1 | 5 | 2 | 4 | 0 | 4 | 1 | 4 | 3 | 4 | 3 | 5 | 1 | 5 | 1 | 5 |

(continued)

| Results for Primer X-4 green, o/c interval 3 months, adhesion scores dry / wet | | | | | | | | | | | | | | | | |
|---|---|---|---|---|---|---|---|---|---|---|---|---|---|---|---|---|
| Pri /Top | Dur 550 | | Cover 456 | | cover 515 | | Cover 630 | | BT | | MG | | BTD | | Self | |
| 22 % | 0 | 2 | 0 | 2 | 0 | 0 | 0 | 2 | 1 | 3 | 0 | 3 | 2 | 5 | 0 | 3 |
| 33 % | 0 | 0 | 0 | 0 | 0 | 0 | 0 | 0 | 0 | 0 | 0 | 0 | 0 | 4 | 0 | 0 |

**Epoxy Formulation 14-16, Primer X-5 grey**

Results Table 5

| Results for Primer X-5 , o/c interval 3 months, | | | | | | | | | | |
|---|---|---|---|---|---|---|---|---|---|---|
| Primer / Top | Dur 550 | | Cover 456 | | Cover 350 | | MG | | Self | |
| | d | w | d | w | D | w | d | w | d | w |
| 0 % | 4 | 5 | 4 | 5 | 0 | 3 | 3 | 4 | 0 | 3 |
| 8 % | 4 | 5 | 4 | 4 | 0 | 3 | 2 | 4 | 0 | 3 |
| 16 % | 3 | 5 | 3 | 3 | 0 | 2 | 0 | 2 | 0 | 0 |
| 24 % | 0 | 2 | 0 | 1 | 0 | 0 | 0 | 0 | 0 | 0 |

**Epoxy Formulation 17-19, Sigma X, Epoxy buildcoat**

Results Table 6

| Results for Epoxy buildcoat X , o/c interval 3 months, adhesion scores dry / wet | | | | | | | | | | |
|---|---|---|---|---|---|---|---|---|---|---|
| Primer / Top | Dur 550 | | Cover 456 | | SELF | | MG | | Cover 515 | |
| | d | w | d | w | d | w | d | w | D | w |
| 0 % | 4 | 5 | 3 | 5 | 0 | 5 | 1 | 5 | 0 | 5 |
| 10 % | 4 | 5 | 3 | 4 | 0 | 2 | 0 | 2 | 0 | 4 |
| 21 % | 0 | 0 | 0 | 1 | 0 | 1 | 0 | 0 | 0 | 0 |
| 32 % | 0 | 0 | 0 | 1 | 0 | 1 | 0 | 0 | 0 | 0 |
| | | | | | | | | | | |
| Primer / Top | TAF | | BTD | | BT | | Sigma Prime 200 | | Cover 650 | |
| | d | w | d | w | d | w | d | w | d | w |
| 0 % | 1 | 4 | 2 | 5 | 4 | 5 | 1 | 3 | 1 | 5 |
| 10 % | 0 | 4 | 2 | 5 | 4 | 4 | 1 | 2 | 1 | 2 |
| 21 % | 0 | 3 | 1 | 4 | 0 | 1 | 0 | 0 | 0 | 1 |
| 32 % | 0 | 1 | 2 | 4 | 0 | 0 | 0 | 0 | 0 | 0 |

**Epoxy Formulation 20, X-2 Grey**

Results Table 7

| Result for Primer X-2 grey, o/c interval 5 months, adhesion score dry / wet | | | | | | |
|---|---|---|---|---|---|---|
| Primer / Top | Dur 550 | | Dur 1800 | | Cover 456 | |
|  | D | w | d | w | d | w |
| 33 % | 0 | 0 | 0 | 1 | 0 | 0 |
| Ref product (0%) | 1 | 5 | 1 | 5 | 0 | 3 |

**Continued Testing**

Continued testing of Epoxy formulations 1-19 continued over an 18 month period and wet results are indicated in the results tables below. The topcoats are as indicated above or in the supplementary Key at the end of the tables. The results clearly show that the formulations of the invention continue to give an extension to the overcoating interval compared with the reference formulations containing no zinc oxide.

Results Table 8(a)

| **Reference Formulation 1** | | | | | | |
|---|---|---|---|---|---|---|
| **Months** | 0 | 1 | 3 | 6 | 9 | 18 |
| **Self** | 0 | 0 | 4 | 5 | 5 | |
| **Dur 550** | 0 | 1 | 5 | 5 | 5 | 4.5 |
| **MG** | 0 | 0 | 1 | 4 | 5 | 3 |
| **Cover 456** | 0 | 1 | 5 | 4 | 2 | 3 |
| **MM** | 0 | 1 | 4 | 5 | 3 | 3 |
| **HR** | 0 | 0 | 0 | 0 | 1 | |
| **BT** | 0 | 1 | 5 | 5 | 4 | |

Results Table 8(b)

| **Example Formulation 1 (36%)** | | | | | | |
|---|---|---|---|---|---|---|
| **Months** | 0 | 1 | 3 | 6 | 9 | 18 |
| **Self** | 0 | 0 | 0 | 0 | 3 | |
| **Dur 550** | 0 | 0 | 0 | 3 | 0 | 1.5 |
| **MG** | 0 | 0 | 0 | 1 | 3 | 2 |
| **Cover 456** | 0 | 0 | 0 | 3 | 1 | 3 |
| **MM** | 0 | 0 | 0 | 4 | 2 | 0 |
| **HR** | 0 | 0 | 0 | 0 | 0 | |
| **BT** | 0 | 0 | 1 | 1 | 1 | |

Results Table 8(c)

| **Example Formulation 2 (12%)** | | | | | | |
|---|---|---|---|---|---|---|
| **Months** | 0 | 1 | 3 | 6 | 9 | 18 |
| **Self** | 0 | 0 | 2 | 0 | 4 | |
| **Dur 550** | 0 | 0 | 3 | 4 | 1 | 3 |
| **MG** | 0 | 0 | 0 | 0 | 3 | 0 |

(continued)

| Example Formulation 2 (12%) | | | | | | |
|---|---|---|---|---|---|---|
| Cover 456 | 0 | 0 | 1 | 1 | 1 | 2 |
| MM | 0 | 0 | 1 | 1 | 1 | 1 |
| HR | 0 | 0 | 0 | 0 | 1 | |
| BT | 0 | 0 | 3 | 2 | 1.5 | |

Results Table 8(d)

| Example Formulation 3 (24%) | | | | | | |
|---|---|---|---|---|---|---|
| Months | 0 | 1 | 3 | 6 | 9 | 18 |
| Self | 0 | 0 | 0 | 0 | 3 | |
| Dur 550 | 0 | 0 | 0 | 1 | 0 | 2 |
| MG | 0 | 0 | 0 | 0 | 2.5 | 1 |
| Cover 456 | 0 | 0 | 0 | 2 | 1 | 3 |
| MM | 0 | 0 | 1 | 3 | 1 | 0 |
| HR | 0 | 0 | 0 | 0 | 0 | |
| BT | 0 | 0 | 2 | 1 | 1 | |

Results Table 9(a)

| Reference Formulation 2 | | | | | | |
|---|---|---|---|---|---|---|
| Months | 0 | 1 | 3 | 6 | 9 | 18 |
| Self | 0 | 3 | 3 | 2 | 3 | |
| Gloss | 0 | 5 | 5 | 5 | 5 | 4 |
| Cover 350 | 0 | 0 | 1 | 1 | 1 | |
| MG | 0 | 1 | 2 | 5 | 5 | 4 |
| Cover 456 | 0 | 5 | 4 | 4 | 3.5 | 2.5 |

Results Table 9(b)

| Example Formulation 4 (37%) | | | | | | |
|---|---|---|---|---|---|---|
| Months | 0 | 1 | 3 | 6 | 9 | 18 |
| Self | 0 | 0 | 0 | 0 | 0 | |
| Gloss | 0 | 0 | 0 | 1 | 1 | 2.5 |
| Cover 350 | 0 | 0 | 0 | 1 | 0 | |
| MG | 0 | 0 | 0 | 2 | 1 | 2 |
| Cover 456 | 0 | 0 | 3 | 4 | 2.5 | 4 |

Results Table 9(c)

| Example Formulation 5 (12.5%) | | | | | | |
|---|---|---|---|---|---|---|
| Months | 0 | 1 | 3 | 6 | 9 | 18 |
| Self | 0 | 0 | 0 | 0 | 0 | |
| Gloss | 0 | 4 | 4 | 4 | 2 | 4 |
| Cover 350 | 0 | 0 | 0 | 0 | 0 | |
| MG | 0 | 0 | 0 | 1 | 3 | 3 |
| Cover 456 | 0 | 4 | 3 | 3 | 1 | 2 |

Results Table 9(d)

| Example Formulation 6 (25%) | | | | | | |
|---|---|---|---|---|---|---|
| Months | 0 | 1 | 3 | 6 | 9 | 18 |
| Self | 0 | 0 | 0 | 0 | 0 | |
| Gloss | 0 | 2 | 0 | 2 | 1 | 2 |
| Cover 350 | 0 | 0 | 0 | 0 | 0 | |
| MG | 0 | 0 | 0 | 0 | 0 | 0 |
| Cover 456 | 0 | 1 | 0 | 4 | 2 | 2 |

Results Table 10(a)

| Reference Formulation 3 | | | | | |
|---|---|---|---|---|---|
| Months | 0 | 1 | 3 | 6 | 9 |
| Self | 0 | 2 | 3 | 4 | 5 |
| Gloss | 0 | 5 | 4 | 5 | 4 |
| Cover 350 | 0 | 0 | 1.5 | 3 | 2 |
| MG | 0 | 1 | 2 | 4 | 5 |
| Cover 456 | 0 | 5 | 4 | 4 | 4 |

Results Table 10(b)

| Example Formulation 7 (41%) | | | | | |
|---|---|---|---|---|---|
| Months | 0 | 1 | 3 | 6 | 9 |
| Self | 0 | 0 | 0 | 0 | 1 |
| Gloss | 0 | 0 | 0 | 0 | 1 |
| Cover 350 | 0 | 0 | 0 | 0 | 0 |
| MG | 0 | 0 | 0 | 0 | 1 |
| Cover 456 | 0 | 0 | 2 | 3 | 1 |

Results Table 10(c)

| Example Formulation 8 (10%) | | | | | |
|---|---|---|---|---|---|
| Months | 0 | 1 | 3 | 6 | 9 |
| Self | 0 | 0 | 0.5 | 2.5 | 4 |
| Gloss | 0 | 2.5 | 4 | 4 | 4 |
| Cover 350 | 0 | 0 | 0 | 1 | 1 |
| MG | 0 | 0 | 1 | 3 | 3.5 |
| Cover 456 | 0 | 2 | 3 | 4 | 3.5 |

Results Table 10(d)

| Example Formulation 9 (20%) | | | | | |
|---|---|---|---|---|---|
| Months | 0 | 1 | 3 | 6 | 9 |
| Self | 0 | 1 | 1 | 2 | 3 |
| Gloss | 0 | 3.5 | 3 | 3 | 3 |
| Cover 350 | 0 | 0 | 1 | 0 | 0 |
| MG | 0 | 0 | 0 | 1 | 3 |
| Cover 456 | 0 | 4 | 3 | 3 | 2 |

Results Table 10(e)

| Example Formulation 10 (30%) | | | | | |
|---|---|---|---|---|---|
| Months | 0 | 1 | 3 | 6 | 9 |
| Self | 0 | 0 | 0 | 2 | 2 |
| Gloss | 0 | 1.5 | 1 | 2 | 1 |
| Cover 350 | 0 | 0 | 0 | 0 | 0 |
| MG | 0 | 0 | 0 | 1 | 0 |
| Cover 456 | 0 | 1 | 1 | 3.5 | 1 |

Results Table 11 (a)

| Reference Example 4 | | | | | | |
|---|---|---|---|---|---|---|
| Months | 0 | 1 | 3 | 6 | 9 | 18 |
| Self | 0 | 2 | 5 | 5 | 5 | |
| Gloss | 0 | 4 | 5 | 5 | 4 | 4 |
| Cover 350 | 0 | 0 | 5 | 4 | 4 | |
| MG | 0 | 3 | 5 | 5 | 5 | 4 |
| Cover 456 | 0 | 2 | 4 | 4 | 3.5 | 3 |
| HR | 0 | 0 | 5 | 2 | 4 | |
| MM | 0 | 4 | 5 | 4 | 3 | 3.5 |
| BT | 0 | 2 | 5 | 4.5 | 4 | |

Results Table 11(b)

| Example Formulation 11 (33%) | | | | | | |
|---|---|---|---|---|---|---|
| **Months** | 0 | 1 | 3 | 6 | 9 | 18 |
| **Self** | 0 | 0 | 0 | 0 | 0 | |
| **Gloss** | 0 | 2 | 0 | 1.5 | 0 | 0 |
| **Cover 350** | 0 | 0 | 0 | 0 | 0 | |
| **MG** | 0 | 0 | 0 | 0 | 1 | 0 |
| **Cover 456** | 0 | 0 | 0 | 0.5 | 0 | 0 |
| **HR** | 0 | 0 | 0 | 0 | 0 | |
| **MM** | 0 | 0 | 0 | 0 | 0 | 0 |
| **BT** | 0 | 0 | 0 | 0 | 2 | |

Results Table 11(c)

| Example Formulation 12 (11%) | | | | | | |
|---|---|---|---|---|---|---|
| **Months** | 0 | 1 | 3 | 6 | 9 | 18 |
| **Self** | 0 | 0 | 5 | 4 | 4 | |
| **Gloss** | 0 | 4 | 5 | 5 | 3 | 3.5 |
| **Cover 350** | 0 | 0 | 4 | 0 | 0.5 | |
| **MG** | 0 | 1 | 5 | 3.5 | 5 | 2 |
| **Cover 456** | 0 | 2 | 4 | 2.5 | 2.5 | 3 |
| **HR** | 0 | 0 | 4 | 0 | 1 | |
| **MM** | 0 | 3 | 4 | 3 | 2 | 2 |
| **BT** | 0 | 2 | 4 | 1 | 3 | |

Results Table 11(d)

| Example Formulation 13 (22%) | | | | | | |
|---|---|---|---|---|---|---|
| **Months** | 0 | 1 | 3 | 6 | 9 | 18 |
| **Self** | 0 | 0 | 3 | 0 | 1 | |
| **Gloss** | 0 | 3 | 3 | 3 | 0 | 1 |
| **Cover 350** | 0 | 0 | 1 | 0 | 0 | |
| **MG** | 0 | 0 | 3 | 1 | 2.5 | 0 |
| **Cover 456** | 0 | 1 | 2 | 0.5 | 1 | 1 |
| **HR** | 0 | 0 | 0 | 0 | 1 | |
| **MM** | 0 | 2 | 2 | 1 | 1 | 0 |
| **BT** | 0 | 0 | 3 | 1 | 2 | |

Results Table 12(a)

| Reference Example 5 | | | | | | |
|---|---|---|---|---|---|---|
| Months | 0 | 1 | 3 | 6 | 9 | 18 |
| Self | 0 | 0 | 3 | 5 | 5 | |
| Gloss | 0 | 4.5 | 5 | 5 | 5 | 5 |
| Cover 350 | 0 | 0.1 | 3 | 3 | 3 | 5 |
| MG | 0 | | 4 | 5 | 5 | 4.5 |
| Cover 456 | 0 | 2 | 4.9 | 4.5 | 4.5 | 5 |

Results Table 12(b)

| Example Formulation 14 (24%) | | | | | | |
|---|---|---|---|---|---|---|
| Months | 0 | 1 | 3 | 6 | 9 | 18 |
| Self | 0 | 0 | 0 | 0 | 0 | |
| Gloss | 0 | 0 | 2 | 4 | 0 | 1.5 |
| Cover 350 | 0 | 0 | 0 | 0 | 0 | 0 |
| MG | 0 | 0 | 0 | 0 | 0 | 0 |
| Cover 456 | 0 | 0 | 1 | 2.5 | 0 | 1 |

Results Table 12(c)

| Example Formulation 15 (8%) | | | | | | |
|---|---|---|---|---|---|---|
| Months | 0 | 1 | 3 | 6 | 9 | 18 |
| Self | 0 | 4 | 3 | 4.5 | 5 | |
| Gloss | 0 | 4 | 5 | 5 | 4 | 5 |
| Cover 350 | 0 | 0 | 3 | 3 | 2.5 | 3 |
| MG | 0 | | 4 | 5 | 5 | 4 |
| Cover 456 | 0 | 1 | 4 | 4.5 | 4 | 4 |

Results Table 12(d)

| Example Formulation 16 (16%) | | | | | | |
|---|---|---|---|---|---|---|
| Months | 0 | 1 | 3 | 6 | 9 | 18 |
| Self | 0 | 0 | 0 | 0 | 3 | |
| Gloss | 0 | 1 | 5 | 4.5 | 4 | 4.5 |
| Cover 350 | 0 | 0 | 2.5 | 1 | 0 | 0 |
| MG | 0 | | 2 | 0 | 2 | 0 |
| Cover 456 | 0 | 0 | 3 | 3.5 | 3 | 3 |

Results Table 13(a)

| Reference Example 6 | | | | | | |
|---|---|---|---|---|---|---|
| Months | 0 | 1 | 3 | 6 | 9 | 18 |
| BTD | 0 | 2 | 2 | 2 | 1 | 1 |
| TAF | 0 | 3 | 1 | 2 | 2 | 2 |
| Cover 456 | 0 | 5 | 5 | 4.5 | 4 | 4 |
| HR | 0 | 0.5 | 5 | 4 | 3 | 5 |
| Dur 550 | 0 | 5 | 5 | 5 | 5 | 5 |
| MG | 0 | 4 | 5 | 5 | 5 | 4 |
| Ref. Ex. 5 | 0 | 1 | 5 | 5 | 5 | |
| SELF | 0 | 0 | 5 | 4.5 | 3.5 | 4 |
| 800 | 0 | 2 | 5 | 5 | 5 | |
| 700 | 0 | 3 | 2.5 | 4 | 4 | |
| Cover 650 | 0 | 5 | 5 | 5 | 4 | |
| BT | 0 | 4.5 | 5 | 5 | 5 | 5 |

Results Table 13(b)

| Example Formulation 17 (32% ZnO) | | | | | | |
|---|---|---|---|---|---|---|
| Months | 0 | 1 | 3 | 6 | 9 | 18 |
| BTD | 0 | 2 | 2 | 1 | 0 | 2 |
| TAF | 0 | 0 | 0 | 1 | 0 | 0 |
| Cover 456 | 0 | 0 | 1 | 2 | 0 | 2 |
| HR | 0 | 0 | 0 | 0 | 0 | 2 |
| Dur 550 | 0 | 0 | 0 | 0 | 0 | 1 |
| MG | 0 | 0 | 0 | 0 | 0 | 0 |
| Ref. Ex. 5 | 0 | 0 | 0 | 0 | 1 | |
| SELF | 0 | 0 | 1 | 0 | 0 | 0 |
| 800 | 0 | 1 | 0 | 1 | 1 | |
| 700 | 0 | 0 | 0 | 0 | 0.5 | |
| Cover 650 | 0 | 0.5 | 0 | 0 | 0 | |
| BT | 0 | 3 | 0 | 1 | 1 | 1 |

Results Table 13(c)

| Example Formulation 18 (10% ZnO) | | | | | | |
|---|---|---|---|---|---|---|
| Months | 0 | 1 | 3 | 6 | 9 | 18 |
| BTD | 0 | 2 | 2 | 2 | 1 | 1 |
| TAF | 0 | 1 | 0 | 2 | 1 | 1 |
| Cover 456 | 0 | 3 | 3.5 | 4 | 3 | 3 |
| HR | 0 | 1 | 3.5 | 2 | 3 | 4 |

(continued)

| Example Formulation 18 (10% ZnO) | | | | | | |
|---|---|---|---|---|---|---|
| Dur 550 | 0 | 5 | 5 | 4.5 | 5 | 4 |
| MG | 0 | 5 | 2 | 5 | 5 | 3.5 |
| Ref. Ex. 5 | 0 | 5 | 3.5 | 4 | 5 | |
| SELF | 0 | 0 | 2 | 0 | 1 | 1 |
| 800 | 0 | 5 | 5 | 5 | 5 | |
| 700 | 0 | 1.5 | 1 | 3 | 3.5 | |
| Cover 650 | 0 | 5 | 0.5 | 5 | 4 | |
| BT | 0 | 4.5 | 0.5 | 4.5 | 4 | 3 |

Results Table 13(d)

| Example Formulation 19 (21% ZnO) | | | | | | |
|---|---|---|---|---|---|---|
| Months | 0 | 1 | 3 | 6 | 9 | 18 |
| BTD | 0 | 1 | 1 | 1 | 0 | 0 |
| TAF | 0 | 0 | 0 | 0 | 0 | 0 |
| Cover 456 | 0 | 1 | 1 | 1 | 2 | 2 |
| HR | 0 | 0 | 0 | 1 | 1 | 2 |
| Dur 550 | 0 | 2 | 0 | 0.5 | 0 | 0 |
| MG | 0 | 0 | 0 | 1 | 0 | 0 |
| Ref. Ex. 5 | 0 | 2 | 1 | 0 | 2 | |
| SELF | 0 | 0 | 1 | 0 | 0 | 0 |
| 800 | 0 | 1 | 0 | 0 | 1 | |
| 700 | 0 | 0 | 0 | 2 | 2 | |
| Cover 650 | 0 | 3 | 0.5 | 0 | 0 | |
| BT | 0 | 3 | 0 | 1 | 2 | 2 |

## Direct / indirect type of zinc oxide

The type of zinc oxide was found to be of importance. When direct (American process) zinc oxide is compared to indirect (French process) zinc oxide, it was observed that indirect types are much more effective. Specific surface area has less effect compared to the production method. Following grades were evaluated on effectivity:

| Supplier | French process | American process |
|---|---|---|
| | | |
| ZCA - Zinc Corporation of America | Kadox 911 | XX-503R |
| | Kadox 930 | |
| | Zinvisible ™ | |
| | | |
| Umicore - Zinc chemicals | Redseal | EPM |

The results obtained in formulation 1 (36% ZnO in dry film) are given in the table 14 below. In this table, the adhesion scores are added and expressed as a percentage of failure. For example, with 3 topcoats the maximum poor score is 30. Therefore, if the sum of dry and wet adhesion score is 9, the score given in the table here is 30%. Therefore, the higher the percentage, the worse the performance.

Table 14

| ZnO grade / X 317 std | 4 M total score | 9 M total score | French / American |
|---|---|---|---|
| | | | |
| Redseal | 8 % | 11 % | F 4.5 m$^2$/g |
| EPM | 30 % | 24 % | A 1.3 m$^2$/g |
| Kadox 911 | 8 % | 23 % | F 9.0 m$^2$/g |
| Kadox 930 | 8 % | 18 % | F 3.2 m$^2$/g |
| Zinvisible | 6 % | 19 % | F 29 m$^2$/g |
| XX-503R | 31 % | 32 % | A 1.2 m$^2$/g |

American process zinc oxide grades EPM and XX-503R have much higher failure rates compared to the French process zinc oxide grades. The nano-sized Zinvisible does not offer extra performance compared to Kadox 930 or Redseal.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A coated metal substrate comprising a metal substrate, at least one epoxy based primer layer, the said primer layer comprising at least 10% w/w zinc oxide in the dry primer coating, and at least one top-coat adhered to the primer layer.

2. A coated metal substrate according to claim 1, wherein the top-coat is a polyurethane, epoxy, alkyd or acrylic resin based top-coat.

3. Process of coating a metal substrate comprising the steps of:-

   - (a) applying to an optionally pre-primed metal substrate, a coating of an epoxy based primer comprising at least 10% zinc oxide w/w dry solids;
   - (b) allowing the primer to dry;
   - (c) applying a top-coat directly to the said primer layer the said top-coat being selected from polyurethane, epoxy, acrylic, or alkyd resin based coatings.

4. A process according to claim 3, wherein the said primer layer is applied directly to an un-primed metal substrate so that only two coats, the primer coat and top-coat, are thereby applied to the metal substrate.

5. A two layer coating system for a metal substrate such as a ship's hull comprising, preferably, consisting of, a first primer coat and a second top-coat wherein the primer coat is an epoxy based primer composition comprising at least 10% zinc oxide w/w dry solids and the top coat is either:-

   (a) an epoxy based top coat,
   (b) a polyurethane based top coat,
   (c) an alkyd resin based top coat, or
   (d) an acrylic resin based top coat

**6.** A process according to claim 3 or 4, wherein after the primer drying step an interval of 10-500 days exposure, typically outdoor exposure, elapses before application of a top-coat.

**7.** Use of zinc oxide as a top-coat to primer adhesion promoter in an epoxy based primer composition.

**8.** Use of an epoxy based primer composition comprising at least 10% zinc oxide w/w dry solids as a primer having improved primer to top-coat delamination inhibition.

**9.** Use of zinc oxide as a top-coat to primer delamination inhibitor in an epoxy based primer composition.

**10.** Use of an epoxy based primer composition comprising at least 10% zinc oxide w/w dry solids as a primer having improved primer to top-coat adhesion.

**11.** Use of an epoxy based primer composition comprising at least 10% zinc oxide w/w dry solids as a primer.

**12.** Use of an epoxy based primer composition comprising at least 10% zinc oxide w/w dry solids as a primer to be overcoated.

**13.** A pre-cured epoxy based primer composition comprising at least 10% zinc oxide w/w dry solids and a diluent.

**Patentansprüche**

**1.** Beschichtetes Metallsubstrat, umfassend ein Metallsubstrat, mindestens eine epoxidbasierte Grundierungsschicht, wobei die Grundierungsschicht mindestens 10 % Gew./Gew. Zinkoxid in der trockenen Grundierungsbeschichtung umfasst, und mindestens eine Deckschicht, die an der Grundierungsschicht haftet.

**2.** Beschichtetes Metallsubstrat nach Anspruch 1, wobei die Deckschicht eine polyurethan-, epoxid-, alkyd- oder acrylharzbasierte Deckschicht ist.

**3.** Verfahren zum Beschichten eines Metallsubstrats, umfassend die folgenden Schritte:

(a) Aufbringen einer Beschichtung einer epoxidbasierten Grundierung, die einen Trockenfeststoffgehalt von mindestens 10 % Zinkoxid Gew./Gew. umfasst, auf ein wahlweise vorgrundiertes Metallsubstrat;
(b) Trocknenlassen der Grundierung;
(c) Aufbringen einer Deckschicht direkt auf die Grundierungsschicht, wobei die Deckschicht aus polyurethan-, epoxid-, alkyd- oder acrylharzbasierten Beschichtungen ausgewählt ist.

**4.** Verfahren nach Anspruch 3, wobei die Grundierungsschicht direkt auf nicht grundiertes Metallsubstrat aufgebracht wird, sodass nur zwei Schichten, nämlich die Grundierungsbeschichtung und die Deckschicht, dadurch auf das Metallsubstrat aufgebracht werden.

**5.** Zweischichtiges Beschichtungssystem für ein Metallsubstrat wie einen Schiffsrumpf, umfassend, vorzugsweise bestehend aus einer ersten Grundierungsbeschichtung und einer zweiten Deckschicht, wobei die Grundierungsbeschichtung eine epoxidbasierte Grundierungszusammensetzung ist, die einen Trockenfeststoffgehalt von mindestens 10 % Zinkoxid Gew./Gew. umfasst, wobei die Deckschicht eine von folgenden ist:

(a) eine epoxidbasierte Deckschicht,
(b) eine polyurethanbasierte Deckschicht,
(c) eine alkydharzbasierte Deckschicht oder
(d) eine acrylharzbasierte Deckschicht.

**6.** Verfahren nach Anspruch 3 oder 4, wobei nach dem Grundierungstrocknungsschritt und vor dem Aufbringen einer Deckschicht ein Zeitraum von 10 bis 500 Tagen der Bewitterung, typischerweise Außenbewitterung vergeht.

**7.** Verwendung von Zinkoxid als ein Haftvermittler für eine Deckschicht an einer Grundierung in einer epoxidbasierten Grundierungszusammensetzung.

**8.** Verwendung einer epoxidbasierten Grundierungszusammensetzung, umfassend einen Trockenfeststoffgehalt von mindestens 10 % Zinkoxid Gew./Gew. als eine Grundierung mit verbesserter Hemmung der Schichtablösung einer Grundierung von einer Deckschicht.

**9.** Verwendung von Zinkoxid als einen Grundierungsschichtablösungshemmer in einer epoxidbasierten Grundierungszusammensetzung.

**10.** Verwendung einer epoxidbasierten Grundierungszusammensetzung, umfassend einen Trockenfeststoffgehalt von mindestens 10 % Zinkoxid Gew./Gew. als eine Grundierung mit verbesserter Haftung einer Grundierung an einer Deckschicht.

**11.** Verwendung einer epoxidbasierten Grundierungszusammensetzung, umfassend einen Trockenfeststoffgehalt von mindestens 10 % Zinkoxid Gew./Gew. als eine Grundierung.

**12.** Verwendung einer epoxidbasierten Grundierungszusammensetzung, umfassend einen Trockenfeststoffgehalt von mindestens 10 % Zinkoxid Gew./Gew. als eine Grundierung, die überbeschichtet werden soll.

**13.** Vorgehärtete epoxidbasierte Grundierungszusammensetzung, umfassend einen Trockenfeststoffgehalt von mindestens 10 % Zinkoxid Gew./Gew. und ein Verdünnungsmittel.

**Revendications**

**1.** Substrat métallique revêtu comprenant un substrat métallique, au moins une couche d'apprêt à base d'époxy, ladite couche d'apprêt comprenant au moins 10 % p/p d'oxyde de zinc dans le revêtement d'apprêt sec, et au moins une couche supérieure adhérant à la couche d'apprêt.

**2.** Substrat métallique revêtu selon la revendication 1, dans lequel la couche supérieure est une couche supérieure à base de résine de polyuréthane, époxyde, alkyde ou acrylique.

**3.** Procédé de revêtement d'un substrat métallique, comprenant les étapes qui consistent à :

(a) appliquer sur un substrat métallique, optionnellement recouvert au préalable d'un apprêt, un revêtement constitué d'un apprêt à base d'époxy comprenant au moins 10 % p/p de solides d'oxyde de zinc à l'état sec ;
(b) laisser sécher l'apprêt ;
(c) appliquer une couche supérieure directement sur ladite couche d'apprêt, ladite couche supérieure étant sélectionnée parmi des revêtements à base de résine de polyuréthane, époxyde, acrylique ou alkyde.

**4.** Procédé selon la revendication 3, dans lequel ladite couche d'apprêt est appliquée directement sur un substrat métallique sans apprêt de telle sorte que seulement deux couches, la couche d'apprêt et la couche supérieure, soient ainsi appliquées sur le substrat métallique.

**5.** Système de revêtement en deux couches pour un substrat métallique tel qu'une coque de navire comprenant, préférablement se composant de, une première couche qui est une couche d'apprêt et une deuxième couche qui est une couche supérieure, la couche d'apprêt étant une composition d'apprêt à base d'époxy comprenant au moins 10 % p/p de solides d'oxyde de zinc à l'état sec et la couche supérieure étant soit :

(a) une couche supérieure à base d'époxy, soit
(b) une couche supérieure à base de polyuréthane, soit
(c) une couche supérieure à base de résine alkyde, soit
(d) une couche supérieure à base de résine acrylique.

**6.** Procédé selon la revendication 3 ou 4, dans lequel, après l'étape de séchage de l'apprêt, un intervalle de 10 à 500 jours d'exposition, typiquement une exposition en plein air, s'écoule avant l'application d'une couche supérieure.

**7.** Utilisation d'oxyde de zinc comme promoteur d'adhérence entre une couche supérieure et un apprêt dans une composition d'apprêt à base d' époxy.

**8.** Utilisation d'une composition d'apprêt à base d'époxy comprenant au moins 10 % p/p de solides d'oxyde de zinc à l'état sec comme apprêt présentant une inhibition améliorée du délaminage entre un apprêt et une couche supérieure.

**9.** Utilisation d'oxyde de zinc comme inhibiteur de délaminage entre une couche supérieure et un apprêt dans une composition d'apprêt à base d'époxy.

**10.** Utilisation d'une composition d'apprêt à base d'époxy comprenant au moins 10 % p/p de solides d'oxyde de zinc à l'état sec comme apprêt présentant une adhérence améliorée entre l'apprêt et une couche supérieure.

**11.** Utilisation d'une composition d'apprêt à base d'époxy comprenant au moins 10 % p/p de solides d'oxyde de zinc à l'état sec comme apprêt.

**12.** Utilisation d'une composition d'apprêt à base d'époxy comprenant au moins 10 % p/p de solides d'oxyde de zinc à l'état sec comme apprêt destiné à être recouvert d'un revêtement.

**13.** Composition d'apprêt à base d'époxy pré-durcie comprenant au moins 10 % p/p de solides d'oxyde de zinc à l'état sec et un diluant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4123418 A
- US 4110304 A
- US 3993655 A
- US 4221701 A

### Non-patent literature cited in the description

- **A. M. PAQUIN ; H. LEE.** Epoxidverbindungen und Harze. Springer Verlag, 1958
- **NEVILLE.** Handbook of Epoxy Resins. MC Graw Hill Book Company, 1982
- **C. A. MAY.** Epoxy Resins-Chemistry and Technology. Marcel Dekker, Inc, 1988
- **LEE ; NEVILLE.** Handbook of Epoxy Resins. MC Graw Hill Book Company, 1987
- Protective Coatings Fundamentals of Chemistry and Composition. 1994
- Encyclopaedia of Polymer Science and Technology. vol. 6, 273
- **KIRK-OTHMER.** ENCYCLOPAEDIA OF POLYMER SCIENCE AND TECHNOLOGY. vol. 18, 633-645
- **ULLMANN.** ENCYCLOPAEDIA OF POLYMER SCIENCE AND TECHNOLOGY. vol. 19, 31-38